# EUROPEAN PATENT SPECIFICATION

(11) **EP 3 217 154 B1**
(45) Date of publication and mention of the grant of the patent: **14.08.2019**
(21) Application number: 16205017.3
(22) Date of filing: 19.12.2016
(51) Int. Cl.: G01F 15/06, G01D 4/00, G08C 17/02, G01F 3/22

(54) **WIRELESS AUTOMATIC UTILITY METER**
DRAHTLOSES AUTOMATISCHES VERBRAUCHSZÄHLER
COMPTEUR D'UTILITÉ AUTOMATIQUE SANS FIL

(30) Priority: 10.03.2016 JP 2016046421
(43) Date of publication of application: 13.09.2017
(73) Proprietor: Panasonic Intellectual Property Management Co., Ltd., Osaka-shi, Osaka 540-6207 (JP)
(72) Inventor: TERAMOTO, Shota, Osaka, 540-6207 (JP); WATANABE, Takashi, Osaka, 540-6207 (JP); NAKAGAWA, Masafumi, Osaka, 540-6207 (JP)
(74) Representative: SSM Sandmair

(56) References cited:
- US-A1- 2009 034 418
- US-A1- 2009 153 357
- US-A1- 2014 169 152
- US-B1- 8 610 594

## Description

### TECHNICAL FIELD

The present invention relates to a wireless automatic inspection meter, in particular a gas meter, for performing flow rate measurement, which is provided with an automatic inspection function, and in particular, relates to preventing the inactivity of flow rate measurement or an emergency shutoff of a valve due to a deficiency in residual battery power.

### BACKGROUND ART

A wireless automatic inspection meter generally includes a meter portion that measures a gas flow rate, a gas shutoff device equipped with a shutoff valve that shuts off the flow of gas, and a wireless communication portion that transmits a measured flow rate value to a management center.

In this kind of wireless automatic inspection meter, there are many meters in which the meter portion and the wireless communication portion act independently in separate housings, but from a viewpoint of miniaturization and cost-reduction a meter in which the meter portion and the wireless communication portion are used commonly and are integrated is required. However, while miniaturization and cost-reduction are obtained as a result of integration, there is a possibility that a plurality of processes such as flow rate detection, gas shutoff, and wireless communication, will be executed simultaneously, and therefore, there is a problem in that the power consumption of a built-in battery will be greatly increased since a significant load is applied to the battery if a plurality of processes overlap.

US 2009/0153357 A1 discloses a device, structure and method for retrofitting a utility meter such as a gas meter with a retrofit module or for new installations to conventional meters so that it can be read remotely and so that retrofit may be accomplished simply by unskilled workers and without damage or alteration of meter. The method for retrofitting a meter of the type having shaft driven dial with dial index pointer and index cover involves removing the meter index cover to access the meter index dial pointer; attaching a magnet to the pointer so that it is carried in orbit around the pointer shaft to which the pointer is attached; and mounting a sensor to the meter adapted to sense the passage of the pointer-mounted magnet and to detect the orbit of index pointer; the attaching of the magnet and the mounting of the sensor being performed without removing the meter dial index assembly.

US 2014/0169152 A1 discloses a node which may be configured for operation in an intelligent network environment, wherein the node communicates via different modes of communication. The node selects a first mode of communication (e.g., mesh network mode). The node communicates via the first mode of communication. In response to determining a first condition (e.g., interference), the node selects a second mode of communication. The node then communicates via the second mode of communication. In response to determining a second condition (e.g., interference ceases), the node selects the first mode of communication and communicates via the first mode of communication.

The disclosed subject-matter of US 8,610,594 B1 covers an apparatus and method for providing a universal Automatic Meter Reading system. Such system may be configured to work in a plurality of modes including a walk-bay, drive-by and fixed network mode. For some configurations RF scavenging technology is used to power the transmitter.

In order to solve the aforementioned problem, JP-A-2008-107267 proposes a method for achieving a suppression in the power consumption of the battery by providing a determination process in a manner in which a flow rate value transmission process to a management center, and a communication process between a shutoff control portion and a communication control portion, do not overlap.

### SUMMARY OF THE INVENTION

However, although JP-A-2008-107267 shows a method for prolonging battery life by reducing the load on a battery during common use of the battery, there are cases in which more power than expected is consumed in the wireless communication portion as a result of communication failure and resending in an inferior communication environment in which there is strong radio interference, or the like. Therefore, there is a problem in that it is also no longer possible to continue secure functioning of flow rate measurement, emergency shutoff, and the like.

The invention is defined by the appended claims.

An exemplary embodiment of the present invention provides a wireless automatic inspection meter that is capable of continuously activating flow rate measurement and emergency shutoff, which are the most crucial processes, during a warranty period by stopping a wireless function even in a case in which power consumption of the battery is more than expected in the wireless communication portion due to an inferior communication environment.

The wireless automatic inspection meter of the exemplary embodiment of the present invention includes a battery, and a meter portion and a wireless communication portion that are driven by the battery. Moreover, the wireless automatic inspection meter includes an arithmetic portion that calculates a power consumption value of the wireless communication portion on the basis of a communication state parameter being a number of failures after carrier sensing of wireless communication, a determination
portion that performs determination by comparing the power consumption value calculated by the arithmetic portion with a settings threshold value, and a control portion that controls a communication function of the wireless communication portion. Furthermore, the control portion controls the communication function in the wireless communication portion on the basis of a determination result of the determination portion.

According to the above-mentioned configuration, the present invention suppresses the power consumption in the wireless communication portion by performing control such as stopping the wireless function even in a case in which power consumption of the battery is more than expected in the wireless communication portion due to an inferior communication environment. Further, the invention exhibits an effect of being capable of continuously activating flow rate measurement and an emergency shutoff function, which are fundamental functions of the wireless automatic inspection meter, during a warranty period.

### BRIEF DESCRIPTION OF DRAWINGS

FIG. 1 is a configuration view of a wireless automatic inspection meter according to a first exemplary embodiment of the present invention.
FIG. 2 is a block diagram of the wireless automatic inspection meter according to the first exemplary embodiment of the present invention.
FIG. 3 is a flowchart that describes control of the wireless automatic inspection meter according to a first example not according to the present invention.
FIG. 4 is a flowchart that describes control of a wireless automatic inspection meter according to a second example not according to the present invention.

### DESCRIPTION OF EMBODIMENTS

Hereinafter, exemplary embodiments of the invention will be specifically described with reference to the drawings.

### (FIRST EXEMPLARY EMBODIMENT)

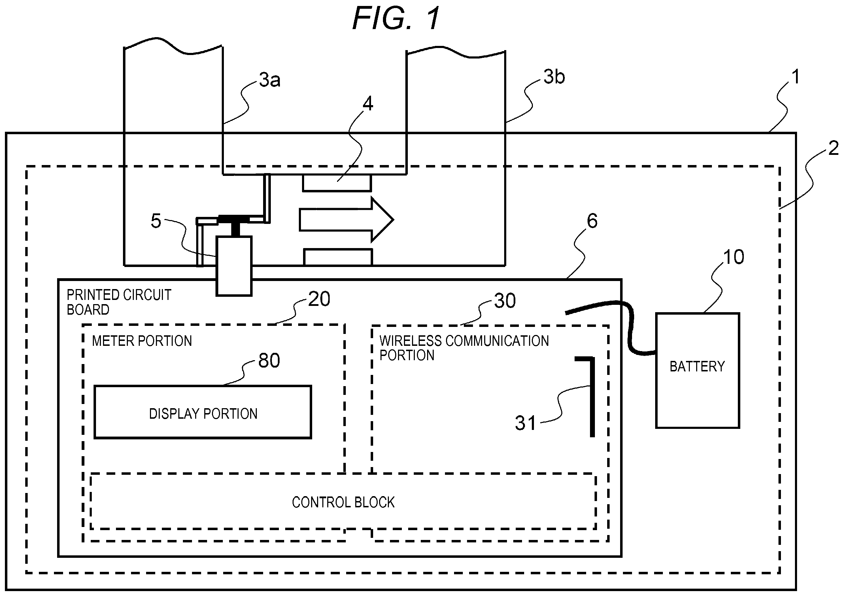

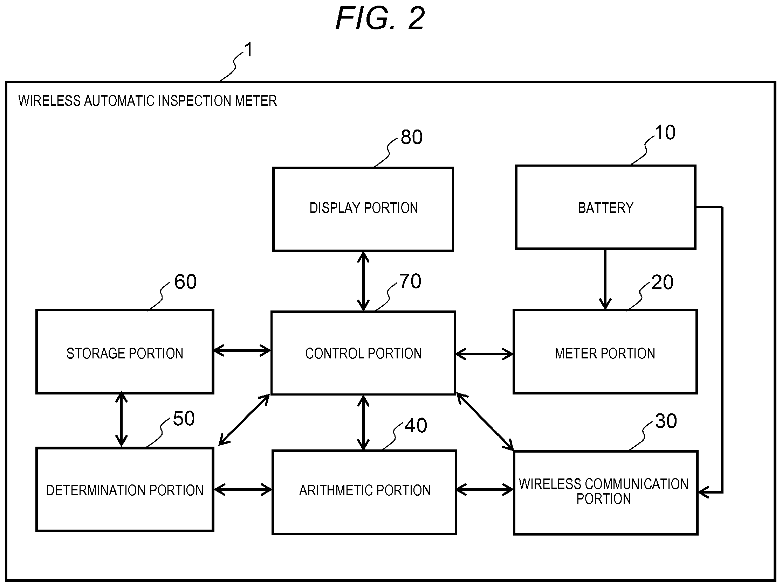

FIG. 1 is a configuration view of a gas meter, which is a wireless automatic inspection meter according to the first exemplary embodiment. FIG. 2 is a block diagram of the wireless automatic inspection meter according to the first exemplary embodiment.

In FIG. 1, wireless automatic inspection meter 1 includes a function of transmitting flow rate data detected by flow rate sensor 4 to a computer of a gas supplier (hereinafter, referred to as a management center) using wireless communication, for example.

In an inner portion of housing 2, which is formed using a box type container (not illustrated in the drawings) formed from a lid (not illustrated in the drawings) made from a resin, and a conductive material, wireless automatic inspection meter 1 is provided with flow rate sensor 4 that measures a flow rate of gas, and gas shutoff device 5 having a built-in shutoff valve that shuts off the gas. In addition, printed circuit board 6, which includes meter portion 20 that controls the actions of flow rate sensor 4 and gas shutoff device 5, and wireless communication portion 30 that transmits flow rate data detected by flow rate sensor 4 and status information of gas shutoff device 5 to the management center (not illustrated in the drawings), is provided in the inner portion of housing 2. Examples of the conductive material that configures the box type container include metals such as aluminum and stainless steel, conductive resins, and the like.

In housing 2, inflow piping 3a and outflow piping 3b of a target measurement object are connected to one another. Gas, which is the target measurement object, that flows into the inside of housing 2 from inflow piping 3a flows out to an outer portion through outflow piping 3b after the flow rate thereof is detected by flow rate sensor 4.

Printed circuit board 6 is fixed to a fixing tray (not illustrated in the drawings), which is formed using a non-conductive material provided in the inner portion of housing 2 to be disposed inside housing 2. Examples of the non-conductive material that configures the fixing tray include resins having an electrical insulating property such as polypropylene, ABS, and the like.

Printed circuit board 6 is mainly configured from meter portion 20 and wireless communication portion 30.

Meter portion 20 is provided with an integrated circuit in which a program is installed. The integrated circuit includes a signal creation circuit that creates a signal to be transmitted on the basis of a detection signal from flow rate sensor 4. The flow rate of the target measurement object of the gas is acquired on the basis of a detection value from flow rate sensor 4 as a result of the integrated circuit being activated on the basis of the program.

The acquisition method of the measured value is not particularly limited. In the present embodiment, a measurement subject is gas, a publicly-known method such as a diaphragm type, an ultrasonic type, a fluidic type method, is adopted. It is sufficient as long as a program that is necessary in order to calculate a measurement value on the basis of the adopted measurement method, is installed in the integrated circuit that is provided in meter portion 20.

Wireless communication portion 30 has a configuration in which a transmission circuit (not illustrated in the drawings) for transmitting data using wireless communication, a reception circuit (not illustrated in the drawings) for processing data received by wireless communication, a matching circuit (not illustrated in the drawings) that matches emission conductor section 31 and the transmission and reception circuits, and the like, are mounted on printed circuit board 6.

Battery 10 is a power source that supplies power to electronic components, and the like, that are mounted on printed circuit board 6 in order to realize the functions of meter portion 20 and wireless communication portion 30, control of the flow rate measurement in meter portion 20 is performed using the power source, and in wireless communication portion 30, wireless communication is performed via emission conductor section 31 as a result of conversion into high-frequency power through a power supply circuit.

FIG. 2 shows a block diagram of the wireless automatic inspection meter according to the present embodiment.

In the present invention, wireless automatic inspection meter 1 that is provided with meter portion 20 and wireless communication portion 30, which are driven by battery 10 includes arithmetic portion 40 that calculates the power consumption in wireless communication portion 30 on the basis of a communication state parameter, and determination portion 50 that performs determination by comparing a power consumption value (set as W) calculated by arithmetic portion 40 with a settings threshold value (set as Wa), which is stored in storage portion 60 in advance.

In this instance, settings threshold value Wa is a value that is determined on the basis of a battery capacity at which it is possible to continuously activate flow rate measurement and an emergency shut-off function, which are fundamental functions of meter portion 20, during a warranty period. Further, settings threshold value Wa is a value that is necessary in order to suppress power consumption by controlling the function of wireless communication portion 30 in a case in which power consumption that exceeds settings threshold value Wa, arises, and is determined in accordance with the control content of wireless communication portion 30.

Further, control portion 70 continues the actions of wireless communication portion 30 in a case in which determination portion 50 determines that the power consumption value W that is calculated by arithmetic portion 40, is less than settings threshold value Wa. In addition, in a case in which determination portion 50 determines that the calculated power consumption value W is settings threshold value Wa or more, control portion 70 suppresses the power consumption by controlling the communication function in wireless communication portion 30.

Control that stops the communication function may be performed as an example of a method of suppressing the power consumption. Additionally, the power consumption value W shows an integrated value of current value × time, and there are also cases in which the terms electric discharge amount and consumed current amount are used.

According to the present invention, in a case in which determination portion 50 determines that the power consumption value W calculated by arithmetic portion 40 is settings threshold value Wa or more, control portion 70 is provided with an alarm function that notifies the management center of a decrease in the residual battery power. As a result of notifying the management center using an alarm, it is possible to prompt rapid replacement of the battery.

In addition, decreasing the power consumption by changing a communication interval of a beacon of the wireless communication may also be used as a method of suppressing the power consumption in wireless communication portion 30.

In addition, decreasing the power consumption by restricting specific functions of wireless communication portion 30 such as suppressing the transmission power, stopping transmission of a beacon, or migrating to a rest mode, for example, may also be used as a method of suppressing the power consumption in wireless communication portion 30.

In addition, a function that performs notification as a result of a function that notifies and displays a state on display portion 80 such as a liquid crystal display (LCD), for example, in a case in which control that suppresses the power consumption in wireless communication portion 30 is being performed in control portion 70, is included.

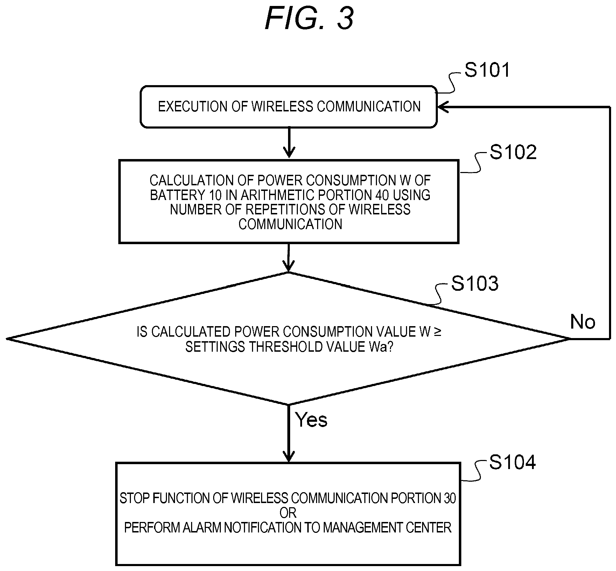

Next, FIG. 3 is a flowchart that describes control of the wireless automatic inspection meter according to a first example not according to the present invention, and description of a case in which the number of repetitions of wireless communication is used as a communication parameter will be described using FIG. 3.

When wireless communication is implemented in wireless communication portion 30 (Step S101), the power consumption value W of battery 10 is calculated in arithmetic portion 40 on the basis of the current number of repetitions of wireless communication (Step S102). Next, the calculated power consumption value W, and settings threshold value Wa, which is stored in storage portion 60 in advance, are compared by determination portion 50 (Step S103).

Further, in a case in which determination portion 50 determines that the calculated power consumption value W is settings threshold value Wa or more (a case in which Step S103 is Yes), a control method that is set in advance is followed. In this instance, the function of wireless communication portion 30 is stopped, or an alarm notification of a decrease in the residual battery power is sent to the management center by control portion 70 (Step S104). On the other hand, in a case in which determination portion 50 determines that the calculated power consumption value W is less than settings threshold value Wa (a case in which Step S103 is No), no processes are performed, and standby is activated until subsequent wireless communication is implemented (return to Step S101).

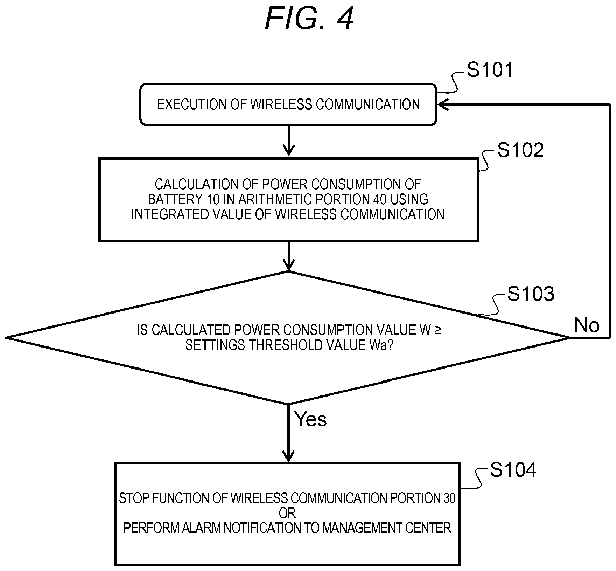

FIG. 4 is a flowchart that describes control of a wireless automatic inspection meter according to a second example not according to the present invention, wherein the integrated time of wireless communication is used as the communication parameter.

When wireless communication is implemented in wireless communication portion 30 (Step S201), the power consumption value W of battery 10 is calculated in arithmetic portion 40 on the basis of the current integrated time of wireless communication (Step S202).

In this instance, the integrated time of wireless communication is a time for which communication actions (transmission, reception and standby) of wireless communication have been implemented, and calculation is performed by integrating the respective repetitions of action for a single communication action time (transmission, reception and standby).

Next, the calculated power consumption value W, and settings threshold value Wa, which is stored in storage portion 60 in advance, are compared by determination portion 50 (Step S203).

Further, in a case in which determination portion 50 determines that the calculated power consumption value W is settings threshold value Wa or more (a case in which Step S203 is Yes), in accordance with a control method that is set in advance, the function of wireless communication portion 30 is stopped, or an alarm notification of a decrease in the residual battery power is sent to the management center (Step S204) by control portion 70. On the other hand, in a case in which determination portion 50 determines that the calculated power consumption value W is less than settings threshold value Wa (a case in which Step S203 is No), no processes are performed, and standby is activated until subsequent wireless communication is implemented (return to Step S201).

Additionally, as further examples not according to the present invention, an integrated value of each action current value (for example, transmission, reception and standby) of wireless communication and action time, or a connection time from activation up to the implementation of communication with the management center, or the like, can be used as communication parameters.

According to the present invention, the number of communication failures after carrier sensing of wireless communication is used as the communication state parameter.

As a result of using these values, it is also possible to perform determination by estimating that an installation environment of the meter is an inferior communication environment.

The above-mentioned description is to be interpreted as an illustrative example only, and is provided with the aim of explaining preferred aspects for executing the present invention to persons skilled in the art. It is possible to substantially change the details of the structures and/or function without departing from the present invention which is defined by the appended claims.

In the above-mentioned manner, in addition to gas meters, it is also possible to apply the teachings of the present description to electric power meters and water meters. Further, even in a case in which the power consumption of the battery is more than expected in an inferior communication environment, it is possible to continuously activate an emergency shut-off function during a warranty period as a result of stopping the wireless function.

### REFERENCE MARKS IN THE DRAWINGS

- 1: wireless automatic inspection meter
- 10: battery
- 20: meter portion
- 30: wireless communication portion
- 31: emission conductor section
- 40: arithmetic portion
- 50: determination portion
- 70: control portion

## Claims

1. A wireless automatic inspection meter (1) being a gas meter, the wireless automatic inspection meter (1) including a battery (10), and a meter portion (20) and a wireless communication portion (30) that are driven by the battery (10), the wireless automatic inspection meter (1) comprising:
a flow rate sensor (4) configured to measure a flow rate of gas;
a gas shutoff device (5) configured to shut off the gas;
an arithmetic portion (40) configured to calculate a power consumption value of the wireless communication portion (30) on the basis of a communication state parameter in the wireless communication portion (30);
a determination portion (50) configured to perform determination by comparing the power consumption value calculated by the arithmetic portion (40) with a settings threshold value; and
a control portion (70) configured to control a communication function of the wireless communication portion (30),
wherein the meter portion (20) is configured to control the actions of the flow rate sensor (4) and the gas shutoff device (5), and
wherein the control portion (70) is configured to control the communication function in the wireless communication portion (30) on the basis of a determination result of the determination portion (50),
**characterized in that**
the control portion (70) is configured to send an alarm to a management center in a case in which it is determined by the determination portion (50) that the power consumption value is the settings threshold value or more, wherein a number of failures after carrier sensing of wireless communication is used as the communication state parameter.

2. The wireless automatic inspection meter (1) of claim 1,
wherein the control portion (70) is configured to change a communication interval of a beacon in the wireless communication portion in a case in which it is determined by the determination portion (50) that the power consumption value is the settings threshold value or more.

3. The wireless automatic inspection meter of claim 1,
wherein the control portion (70) is configured to restrict the communication function in the wireless communication portion in a case in which it is determined by the determination portion (50) that the power consumption value is the settings threshold value or more.

4. The wireless automatic inspection meter of claim 1,
wherein the control portion (70) is configured to stop the communication function in the wireless communication portion in a case in which it is determined by the determination portion (50) that the power consumption value is the settings threshold value or more.

## Patentansprüche

1. Drahtloses automatisches Inspektionsmessgerät (1), das ein Gaszähler ist, wobei das drahtlose automatische Inspektionsmessgerät (1) eine Batterie (10) und einen Messgerätabschnitt (20) und einen drahtlosen Kommunikationsabschnitt (30), die von der Batterie (10) angetrieben werden, beinhaltet, wobei das drahtlose automatische Inspektionsmessgerät (1) Folgendes umfasst:
einen Durchflussratensensor (4), der konfiguriert ist, eine Durchflussrate von Gas zu messen;
eine Gasabschaltvorrichtung (5), die konfiguriert ist, das Gas abzuschalten;
einen arithmetischen Abschnitt (40), der konfiguriert ist, einen Stromverbrauchswert des drahtlosen Kommunikationsabschnitts (30) auf Grundlage eines Kommunikationszustandsparameters in dem drahtlosen Kommunikationsabschnitt (30) zu berechnen;
einen Bestimmungsabschnitt (50), der konfiguriert ist, eine Bestimmung durch Vergleichen des Stromverbrauchswerts, der durch den arithmetischen Abschnitt (40) berechnet wird, mit einem Einstellungsschwellwert durchzuführen; und
einen Steuerabschnitt (70), der konfiguriert ist, eine Kommunikationsfunktion des drahtlosen Kommunikationsabschnitts (30) zu steuern,
wobei der Messgerätabschnitt (20) konfiguriert ist, die Aktionen des Durchflussratensensors (4) und der Gasabschaltvorrichtung (5) zu steuern, und
wobei der Steuerabschnitt (70) konfiguriert ist, die Kommunikationsfunktion in dem drahtlosen Kommunikationsabschnitt (30) auf Grundlage eines Bestimmungsergebnisses des Bestimmungsabschnitts (50) zu steuern,
**dadurch gekennzeichnet, dass**
der Steuerabschnitt (70) konfiguriert ist, einen Alarm an ein Verwaltungscenter in einem Fall zu senden, in dem durch den Bestimmungsabschnitt (50) bestimmt ist, dass der Stromverbrauchswert der Einstellungsschwellwert oder mehr ist, wobei eine Anzahl von Fehlern nach der Trägererfassung von drahtloser Kommunikation als der Kommunikationszustandsparameter verwendet wird.

2. Drahtloses automatisches Inspektionsmessgerät (1) nach Anspruch 1,
wobei der Steuerabschnitt (70) konfiguriert ist, ein Kommunikationsintervall eines Beacons in dem drahtlosen Kommunikationsabschnitt in einem Fall zu ändern, in dem durch den Bestimmungsabschnitt (50) bestimmt ist, dass der Stromverbrauchswert der Einstellungsschwellwert oder mehr ist.

3. Drahtloses automatisches Inspektionsmessgerät nach Anspruch 1,
wobei der Steuerabschnitt (70) konfiguriert ist, die Kommunikationsfunktion in dem drahtlosen Kommunikationsabschnitt in einem Fall zu beschränken, in dem durch den Bestimmungsabschnitt (50) bestimmt ist, dass der Stromverbrauchswert der Einstellungsschwellwert oder mehr ist.

4. Drahtloses automatisches Inspektionsmessgerät nach Anspruch 1,
wobei der Steuerabschnitt (70) konfiguriert ist, die Kommunikationsfunktion in dem drahtlosen Kommunikationsabschnitt in einem Fall anzuhalten, in dem durch den Bestimmungsabschnitt (50) bestimmt ist, dass der Stromverbrauchswert der Einstellungsschwellwert oder mehr ist.

## Revendications

1. Compteur d'inspection automatique sans fil (1), qui est un compteur de gaz, le compteur d'inspection automatique sans fil (1) comprenant une batterie (10) et une partie de compteur (20) et une partie de communication sans fil (30) qui sont entraînées par la batterie (10), le compteur d'inspection automatique sans fil (1) comprenant :
un capteur de débit (4) configuré pour mesurer un débit de gaz ;
un dispositif de coupure de gaz (5) configuré pour couper le gaz ;
une partie arithmétique (40) configurée pour calculer une valeur de consommation d'énergie de la partie de communication sans fil (30) sur la base d'un paramètre d'état de communication dans la partie de communication sans fil (30) ;
une partie de détermination (50) configurée pour effectuer une détermination en comparant la valeur de consommation d'énergie calculée par la partie arithmétique (40) à une valeur seuil de réglages ; et
une partie de commande (70) configurée pour commander une fonction de communication de la partie de communication sans fil (30),
la partie de compteur (20) étant configurée pour commander les actions du capteur de débit (4) et du dispositif de coupure de gaz (5), et
la partie de commande (70) étant configurée pour commander la fonction de communication dans la partie de communication sans fil (30) sur la base d'un résultat de détermination de la partie de détermination (50),
**caractérisé en ce que**
la partie de commande (70) est configurée pour envoyer une alarme à un centre de gestion dans un cas où il est déterminé par la partie de détermination (50) que la valeur de consommation d'énergie est égale ou supérieure à la valeur seuil de réglages, un nombre de défaillances après détection de porteuse de la communication sans fil étant utilisé en tant que paramètre d'état de communication.

2. Compteur d'inspection automatique sans fil (1) de la revendication 1,
dans lequel la partie de commande (70) est configurée pour modifier un intervalle de communication d'une balise dans la partie de communication dans un cas où il est déterminé par la partie de détermination (50) que la valeur de consommation d'énergie est supérieure ou égale à la valeur seuil de réglages.

3. Compteur d'inspection automatique sans fil de la revendication 1,
dans lequel la partie de commande (70) est configurée pour limiter la fonction de communication dans la partie de communication sans fil dans un cas où il est déterminé par la partie de détermination (50) que la valeur de consommation d'énergie est supérieure ou égale à la valeur seuil de réglages.

4. Compteur d'inspection automatique sans fil de la revendication 1,
dans lequel la partie de commande (70) est configurée pour arrêter la fonction dans la partie de communication sans fil dans un cas où il est déterminé par la partie de détermination (50) que la valeur de consommation d'énergie est supérieure ou égale à la valeur seuil de réglages.
